# EUROPÄISCHE PATENTANMELDUNG

(11) **EP 1 930 580 A2**
(43) Veröffentlichungstag der Anmeldung: **11.06.2008**
(21) Anmeldenummer: 07120744.3
(22) Anmeldetag: 15.11.2007
(51) Int. Cl.: F02K 1/46, F02K 1/82

(54) **Flugtriebwerk**

(30) Priorität: 30.11.2006 DE 102006056643
(71) Anmelder: MTU Aero Engines GmbH, 80995 München (DE)
(72) Erfinder: Sharp, John, 85221, Dachau (DE)

(57) **Zusammenfassung**

Die Erfindung betrifft ein Flugtriebwerk, mit einem Kemtriebwerk (10), welches mindestens einen Verdichter, mindestens eine Brennkammer und mindestens eine Turbine aufweist, und mit einem Abgasdüscnmodul (13), um einen das Flugtricbwerk verlassenden Abgasstrom in die Umgebungsluft des Flugtriebwerks abzuleiten. Erfindungsgemäß sind einer der Umgebungsluft zugewandten Wand (15) des Abgasdüsenmoduls (13) mehrere Leitelemente zugeordnet, die zur Geräuschreduzierung des Flugtriebwerks in der Umgebungsluft desselben eine Verwirbelung bewirken.

## Beschreibung

Die Erfindung betrifft ein Flugtriebwerk nach dem Oberbegriff des Anspruchs 1.

Üblicherweise umfassen als Strahltriebwerke ausgebildete Flugtriebwerke ein Fanmodul und ein als Gasturbine ausgebildetes Kerntriebwerk. Das Kerntriebwerk ist in Strömungsrichtung gesehen stromabwärts des Fanmoduls positioniert, wobei ein Teil der das Fanmodul durchströmenden Strömung dem Kerntriebwerk zugeführt wird, wohingegen der andere Teil der das Fanmodul durchströmenden Strömung als sogenannte Bypassströmung des Fanmoduls am Kerntriebwerk vorbei geführt wird. Solche Flugtriebwerke bezeichnet man auch als Zweikreisstrahltriebwerke. Es sind auch Flugtriebwerke ohne Fanmodul und damit ohne Bypassströmung bekannt, die als Einkreisstrahltriebwerke bezeichnet werden.

Das Kerntriebwerk eines Flugtriebwerks verfügt über mindestens einen Verdichter, mindestens eine Brennkammer sowie mindestens eine Turbine. Üblicherweise verfügt das Kemtriebwerk über zwei stromaufwärts einer Brennkammer positionierte Verdichter sowie zwei stromabwärts der Brennkammer positionierte Turbinen. Bei den zwei Verdichtern handelt es sich dann um einen Niederdruckverdichter sowie einen Hochdruckverdichter und bei den zwei Turbinen um eine Hochdruckturbine sowie eine Niederdruckturbine. Es sind auch Kerntriebwerke bekannt, die zusätzlich über einen Mitteldruckverdichter und eine Mitteldruckturbine verfügen.

Flugtriebwerke erzeugen im Betrieb einen hohen Lärmpegel. Dies gilt insbesondere für Flugtriebwerke, die ein Nachbrennermodul umfassen und im Nachbrennerbetrieb betrieben werden können, wie dies insbesondere bei in militärischen Flugzeugen eingesetzten Flugtriebwerken der Fall ist.

Zur Reduzierung des von Flugtriebwerken erzeugten Lärms kommen nach dem Stand der Technik sogenannte Mischer zum Einsatz. Derartige Mischer sind z.B. aus der US 2,897,883 sowie aus der US 4,292,803 bekannt.

Hiervon ausgehend liegt der vorliegenden Erfindung das Problem zu Grunde, ein Flugtriebwerk mit einer neuartigen Lärmreduzierungsmaßnahme zu schaffen. Dieses Problem wird durch ein Flugtriebwerk gemäß Anspruch 1 gelöst. Erfindungsgemäß sind einer der Umgebungsluft zugewandten Wand des Abgasdüsenmoduls mehrere Leitelemente zugeordnet, die zur Geräuschreduzierung des Flugtriebwerks in der Umgebungsluft eine Verwirbelung bewirken.

Die Erfindung stellt ein völlig neuartiges Konzept zur Reduzierung des von Flugtriebwerken erzeugten Lärms bereit. Erfindungsgemäß sind einer der Umgebungsluft zugewandten Wand des Abgasdüsenmoduls mehrere Leitelemente zugeordnet, die zur Geräuschreduzierung des Flugtriebwerks in der Umgebungsluft desselben eine Verwirbelung bewirken. Hierdurch ist es möglich, die Scherkräfte, die der eine relativ große Strömungsgeschwindigkeit aufweisende Abgasstrom auf die eine relativ geringe Strömungsgeschwindigkeit aufweisende Umgebungsluft ausübt, zu reduzieren. Hierdurch kann der von einem Flugtriebwerk erzeugte Lärm verringert werden.

Ein weiterer Vorteil der Erfindung liegt darin, dass die Leitelemente die Strömungsgeschwindigkeit des Abgasstroms nicht reduzieren, so dass ein vom Flugtriebwerk bereitgestellter Schub nicht verringert wird. Die erfindungsgemäß bewirkte Lärmreduzierung hat demnach keinen negativen Einfluss auf den vom Flugtriebwerk bereitstellbaren Schub. Ein weiterer Vorteil der Erfindung liegt darin, dass die von den Leitelementen bewirkte Verwirbelung der Umgebungsluft des Flugtriebwerks die von demselben abgestrahlte Infrarotstrahlung reduziert, so dass Wärmesuchsysteme, die zur Ortung von Flugzeugen eingesetzt werden, ein Flugzeug mit einem derartigen Flugtriebwerk schwerer erfassen können.

Vorzugsweise sind der Wand des Abgasdüsenmoduls über den Umfang verteilt mehrere Leitelemente zugeordnet, wobei die Wand des Abgasdüsenmoduls insbesondere aus mehreren verstellbaren Düsenklappen gebildet ist, und wobei jeder Düsenklappe mindestens ein Leitelement zugeordnet ist.

Nach einer ersten Weiterbildung der Erfindung ist das Flugtriebwerk als Einkreisstrahltriebwerk ausgebildet, wobei ein das Kerntriebwerk verlassender Abgasstrom vor Zuleitung desselben in das Abgasdüsenmodul einem Nachbrennermodul zuführbar ist.

Nach einer zweiten, alternativen Weiterbildung der Erfindung ist das Flugtriebwerk als Zweikreisstrahltriebwerk ausgebildet, wobei ein das Kerntriebwerk verlassender Abgasstrom mit einem Bypassstrom mischbar ist, und wobei diese Mischung vor Zuleitung derselben in das Abgasdüsenmodul einem Nachbrennermodul zuführbar ist.

Nach einer dritten, ebenfalls alternativen Weiterbildung der Erfindung ist das Flugtriebwerk als Zweikreisstrahltriebwerk ausgebildet, wobei ein das Kerntriebwerk verlassender Abgasstrom unmittelbar dem Abgasdüsenmodul zuführbar ist, um denselben in die von einem Bypassstrom gebildete Umgebungsluft abzuleiten.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte, perspektivische Seitenansicht eines erfindungsgemäßen Flugtriebwerks; und
- Fig. 2: ein Detail des erfindungsgemäßen Flugtriebwerks.

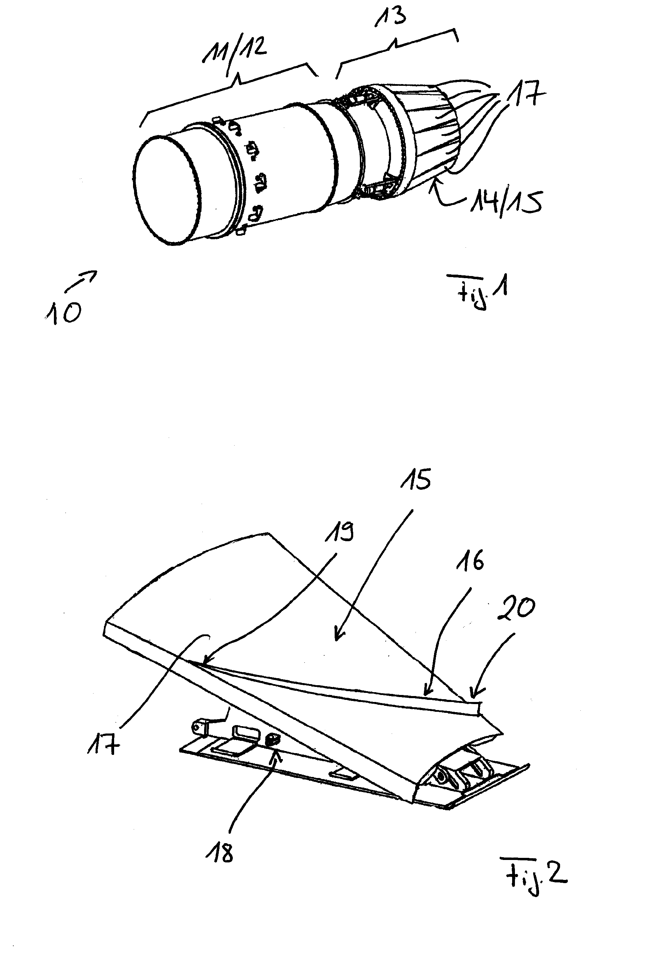

Fig. 1 zeigt stark schematisiert ein als Einkreisstrahltriebwerk ausgebildetes Flugtriebwerk 10, welches ein Kerntriebwerk 11 sowie ein in Strömungsrichtung gesehen dem Kerntriebwerk 11 nachgeordnetes Nachbrennermodul 12 umfasst. Stromabwärts des Nachbrennermoduls 12 umfasst das Flugtriebwerk 10 ein Abgasdüsenmodul 13.

Das Kerntriebwerk 11 umfasst mindestens einen Verdichter, mindestens eine Brennkammer sowie mindestens eine Turbine. Ein das Kerntriebwerk 11 verlassender Abgasstrom wird zur Erhöhung des vom Flugtriebwerk bereitstellbaren Schubs dem Nachbrennermodul 12 zugeführt und unter Vermischung mit Kraftstoff im Nachbrennermodul einer weiteren Verbrennung unterzogen, wobei im Anschluss an das Nachbrennermodul der Abgasstrom über das Abgasdüsenmodul 13 in eine Umgebungsluft des Flugtriebwerks 10 eingeleitet wird. Das Abgasdüsenmodul 13 verfügt hierzu über eine Abgasdüse 14, der den Abgasstrom von der Umgebungsluft des Flugtriebwerks 10 trennt.

An dieser Stelle sei bereits darauf hingewiesen, dass die hier vorliegende Erfindung nicht auf Einkreisstrahltriebwerke beschränkt ist. Vielmehr kann die Erfindung auch bei sogenannten Zweikreisstrahltriebwerken verwendet werden, die über eine nicht durch das Kerntriebwerk 11 geleitete Bypassströmung verfügen.

Bei militärischen Zweikreisstrahltriebwerken wird diese Bypassströmung in Strömungsrichtung gesehen stromaufwärts des Nachbrennermoduls mit dem das Kerntriebwerk verlassenden Abgasstrom gemischt, wobei diese Mischung dann in das Nachbrennermodul gelangt und im Nachbrennermodul mit Kraftstoff einer weiteren Verbrennung unterzogen wird.

Bei zivilen Zweikreisstrahltriebwerken, die über kein Nachbrennermodul verfügen, bildet die Bypassströmung des Kerntriebwerks die Umgebungsluft des Flugtriebwerks, so dass im Bereich des Abgasdüsenmoduls der Abgasstrom mit der Bypassströmung gemischt wird.

Zur Reduzierung des von einem Flugtriebwerk 10 erzeugten Lärms wird im Sinne der hier vorliegenden Erfindung vorgeschlagen, einer der Umgebungsluft zugewandten Wand 15 der Abgasdüse 14 des Abgasdüsenmoduls 13 mehrere Leitelemente 16 zuzuordnen, die zur Geräuschreduzierung in der Umgebungsluft eine Verwirbelung bewirken.

Durch die verwirbelte Umgebungsluft reduzieren sich die von dem das Abgasmodul 13 verlassenden, eine relativ hohe Strömungsgeschwindigkeit aufweisenden Abgasstrom in der eine relativ geringe Strömungsgeschwindigkeit aufweisenden Umgebungsluft bewirkten Scherkräfte, ohne dass die Strömungsgeschwindigkeit des Abgasstroms verringert wird. Über den Umfang der Wand 15 der Abgasdüse 14 des Abgasdüsenmoduls 13 sind mehrere Leitelemente 16 verteilt angeordnet.

Im gezeigten Ausführungsbeispiel ist die Wand 15 der Abgasdüse 14 des Abgasdüsenmoduls 13 aus mehreren verstellbaren Düsenklappen 17 gebildet. Fig. 2 zeigt eine derartige verstellbare Düsenklappe 17 zusammen mit einem Träger 18 derselben in Alleindarstellung.

Wie Fig. 2 entnommen werden kann, ist der verstellbaren Düsenklappe 17 ein Leitelement 16 zugeordnet. Vorzugsweise ist jeder der verstellbaren Düsenklappen 17 ein derartiges Leitelement 16 zugeordnet.

Alternativ können jeder Düsenklappe 17 auch mehrere Leitelemente 16 zugeordnet sein. Ebenso ist es möglich, lediglich einer Teilmenge der bewegbaren Düsenklappen 17 eine oder auch mehrere Leitelemente 16 zuzuordnen.

Gemäß Fig. 2 verfügt das Leitelement 16 an einem in Strömungsrichtung gesehen stromaufwärtigen Ende einen im Wesentlichen parallel zu einer Axialrichtung des Flugtriebwerks 10 verlaufenden Abschnitt 19. An einem stromabwärtigen Ende verfügt das Leitelement 16 hingegen über einen Abschnitt 20, der in Umfangsrichtung gegenüber der Axialrichtung schräggestellt ist. Ausgehend von dem stromaufwärtigen Ende bzw. dem Abschnitt 19 in Richtung auf das stromabwärtige Ende bzw. den Abschnitt 20 vergrößert sich die Radialerstreckung des Leitelements 16 kontinuierlich.

Die Leitelemente 16 sind vorzugsweise aus einem leichten Werkstoff hergestellt, wie z.B. aus Titan. Zur weiteren Gewichtsreduzierung der Leitelemente ist es möglich, dieselben aus einem Kompositwerkstoff zu fertigen.

Die Leitelemente 16 können lösbar mit der Wand 15 der Abgasdüse 14 des Abgasdüsenmoduls 13 verbunden sein. In diesem Fall ist es dann möglich, ein Flugtriebwerk bedarfsweise mit den Leitelementen 16 auszurüsten.

Weiterhin ist es möglich, dass die Leitelemente 16 gegenüber der Wand 15 der Abgasdüse 14 des Abgasdüsenmoduls 13 verstellbar ausgebildet sind. In diesem Fall ist es dann möglich, die Position der Leitelemente 16 relativ zur Wand 15 an Betriebsbedingungen des Flugtriebwerks optimal anzupassen. Derart verstellbare Leitelemente 16 kommen insbesondere dann zur Anwendung, wenn die Wand 15 der Abgasdüse 14 nicht verstellbar ausgebildet ist.

## Patentansprüche

1. Flugtriebwerk, mit einem Kerntriebwerk, welches mindestens einen Verdichter, mindestens eine Brennkammer und mindestens eine Turbine aufweist, und mit einem Abgasdüsenmodul, um einen das Flugtriebwerk verlassenden Abgasstrom in die Umgebungsluft desselben abzuleiten,
**dadurch gekennzeichnet,**
**dass** einer der Umgebungsluft zugewandten Wand (15) des Abgasdüsenmoduls (13) mehrere Leitelemente (16) zugeordnet sind, die zur Geräuschreduzierung des Flugtriebwerks in der Umgebungsluft eine Verwirbelung bewirken.

2. Flugtriebwerk nach Anspruch 1,
**dadurch gekennzeichnet,**
**dass** dasselbe als Einkreisstrahltriebwerk ausgebildet ist, und dass ein das Kerntriebwerk verlassender Abgasstrom vor Zuleitung desselben in das Abgasdüsenmodul einem Nachbrennermodul zuführbar ist.

3. Flugtriebwerk nach Anspruch 1,
**dadurch gekennzeichnet,**
**dass** dasselbe als Zweikreisstrahltriebwerk ausgebildet ist, und dass ein das Kerntriebwerk verlassender Abgasstrom mit einem Bypassstrom mischbar, wobei diese Mischung vor Zuleitung derselben in das Abgasdüsenmodul einem Nachbrennermodul zuführbar ist.

4. Flugtriebwerk nach Anspruch 2 oder 3,
**dadurch gekennzeichnet,**
**dass** das Nachbrennermodul in Strömungsrichtung gesehen stromabwärts des Kerntriebwerks und stromaufwärts des Abgasdüsenmoduls positioniert ist.

5. Flugtriebwerk nach Anspruch 1,
**dadurch gekennzeichnet,**
**dass** dasselbe als Zweikreisstrahltriebwerk ausgebildet ist, und dass ein das Kerntriebwerk verlassender Abgasstrom unmittelbar dem Abgasdüsenmodul zuführbar ist, um denselben in die von einem Bypassstrom gebildete Umgebungsluft abzuleiten.

6. Flugtriebwerk nach einem oder mehreren der Ansprüche 1 bis 5,
**dadurch gekennzeichnet,**
**dass** der Wand (15) des Abgasdüsenmoduls (13) über den Umfang verteilt mehrere Leitelemente (16) zugeordnet sind.

7. Flugtriebwerk nach einem oder mehreren der Ansprüche 1 bis 6,
**dadurch gekennzeichnet,**
**dass** die Wand (15) bzw. Abgasdüse (14) des Abgasdüsenmoduls (13) aus mehreren verstellbaren Düsenklappen (17) gebildet ist, wobei jeder Düsenklappe (17) mindestens ein Leitelement (16) zugeordnet ist.

8. Flugtriebwerk nach einem oder mehreren der Ansprüche 1 bis 7,
**dadurch gekennzeichnet,**
**dass** jedes Leitelement (16) an einem in Strömungsrichtung gesehen stromaufwärtigen Ende einen im wesentlichen parallel zur einer Axialrichtung des Flugtriebwerks verlaufenden Abschnitt (19) und an einem stromabwärtigen Ende einen gegenüber der Axialrichtung in Umfangrichtung schräggestellten Abschnitt (20) aufweist.

9. Flugtriebwerk nach Anspruch 8,
**dadurch gekennzeichnet,**
**dass** sich eine Radialerstreckung jedes Leitelements (16) ausgehend von dem stromaufwärtigen Ende in Richtung auf das stromabwärtige Ende vergrößert.

10. Flugtriebwerk nach einem oder mehreren der Ansprüche 1 bis 9,
**dadurch gekennzeichnet,**
**dass** die Leitelemente gegenüber der Wand des Abgasdüsenmoduls verstellbar ausgebildet sind.
